# EUROPÄISCHE PATENTSCHRIFT

(11) **EP 1 289 087 B1**
(45) Veröffentlichungstag und Bekanntmachung des Hinweises auf die Patenterteilung: **29.08.2007**
(21) Anmeldenummer: 02018699.5
(22) Anmeldetag: 21.08.2002
(51) Int. Cl.: H02G 3/08

(54) **Verschluss- und Abdichtelement**
Closing and sealing element
Elément de fermeture et d'étanchéisation

(30) Priorität: 31.08.2001 DE 10142628
(43) Veröffentlichungstag der Anmeldung: 05.03.2003
(73) Patentinhaber: gabo Systemtechnik GmbH, 94559 Niederwinkling (DE)
(72) Erfinder: Bauer, Peter, 94357 Konzell (DE); Karl, Markus, 94327 Bogen (DE); Haimerl, Josef, 94327 Bogen (DE); Lederer, Roland, 93049 Regensburg (DE)

(56) Entgegenhaltungen:
- EP-A- 0 650 007
- US-A- 5 302 779

## Beschreibung

Die Erfindung betrifft ein mehrteiliges Verschluss- und Abdichtelement gemäß dem Oberbegriff des Hauptanspruches.

Verschluss- und Abdichtelemente sind an sich bekannt. Sie dienen insbesondere der Abdichtung von einem oder mehreren in Kabelkanälen verlegter Kabel bzw. Rohre und/oder als Verschlussstopfen zu deren Verschluss gegenüber der Umgebung.

Solche Abdichtelemente sind u.a. in der DE 198 49 941 C1 (Klemmmuffenverbindung) beschrieben, die mit großen Verschlussklammern entlang der Trennebene von zwei Rohrhalbschalen und einer großflächigen Dichtmatte die erforderliche Dichtwirkung ermöglicht.

Weitere Rohrmuffen dieser Art gehen aus der DE 78 33 835 U1 hervor, bei der in den zwischen Rohraußenwand und Muffeninnenraumverbleibenden Raum eine hochviskose Dichtmasse eingebracht ist und der EP 0650007 B1, die mit einer längsgeteilten Dichtmatte ausgerüstet ist; sowie der US 5,302,779 A.

Der Nachteil dieser bekannten Abdichtelemente besteht auch darin, dass damit kleinere mit Kabeln belegte Rohre, wegen der relativ großen Abdichtelemente, Gehäuse und Verbindungsklammem, nicht abgedichtet werden können.

Eine Verminderung der Abmessungen solcherart ausgebildeter Abdichtelemente führt deshalb nicht zum Ziel, da damit eine Vielzahl kleiner Einzelteile die Gefahr in sich birgt, auf der Baustelle bei Montagearbeiten verloren zu gehen.

Der Erfindung, wie sie in den Ansprüchen beschrieben ist, liegt daher die Aufgabe zugrunde, ein Verschluss und Abdichtelement zu besitzen, das auch für Kabelschutzrohre kleineren Durchmessers geeignet ist.

Der mit dem Gegenstand der Erfindung erzielte Vorteil liegt insbesondere in der Eignung des vorgeschlagenen Verschluss und Abdichtelementes für die Abdichtung auch dünner Kabel, wie z.B. Glasfaserkabel in Kabelschutzrohren geringeren Durchmessers und der gleichzeitigen Verwendung als Verschluss und/oder Abdichtelement.

Die Erfindung ist nachstehend anhand eines in den Abbildungen dargestellten Ausführungsbeispieles näher erläutert

Es zeigt:
Fig. 1 einen Schnitt durch die zylindrische Dichthülse,
Fig. 2 eine Seitenansicht des Gehäuses,
Fig. 3 einen Schnitt in Richtung A-B-C der Fig. 2,

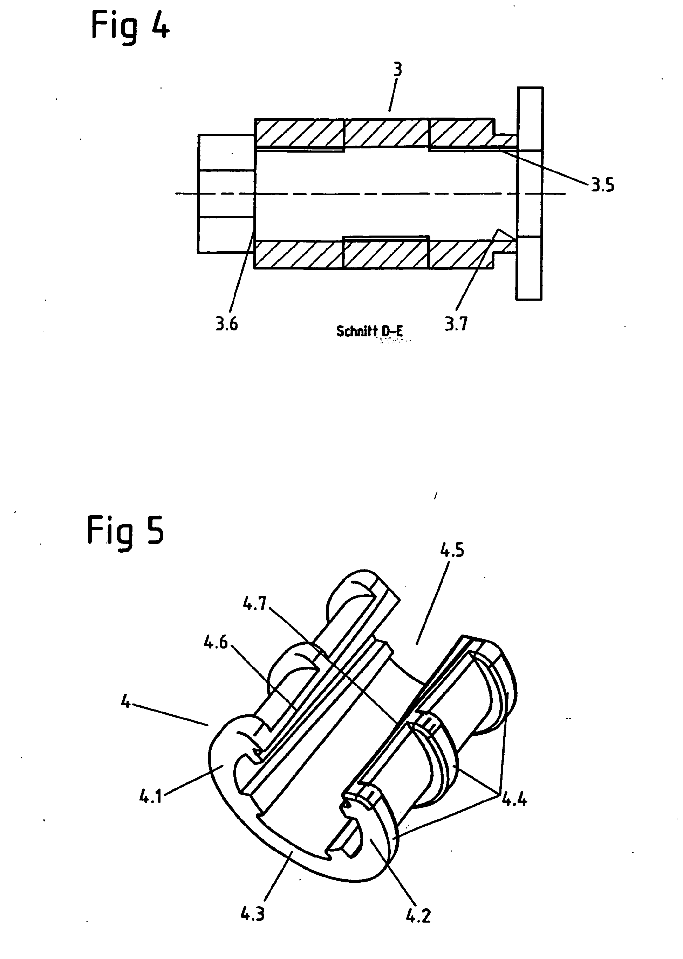

Fig. 4 einen Schnitt in Richtung D-E der Fig. 2,
Fig. 5 eine perspektivische Darstellung des Verschlusselementes und
Fig. 6 eine perspektivische Gesamtansicht des Verschluss- und Abdichtelementes.

Das in den Abbildungen dargestellte Verschluss und Abdichtelement besteht im wesentlichen aus nur drei Teilen, einer zylindrischen Dichthülse 2, einem zweiteiligen Gehäuse 3 und einem Verschlusselement 4.

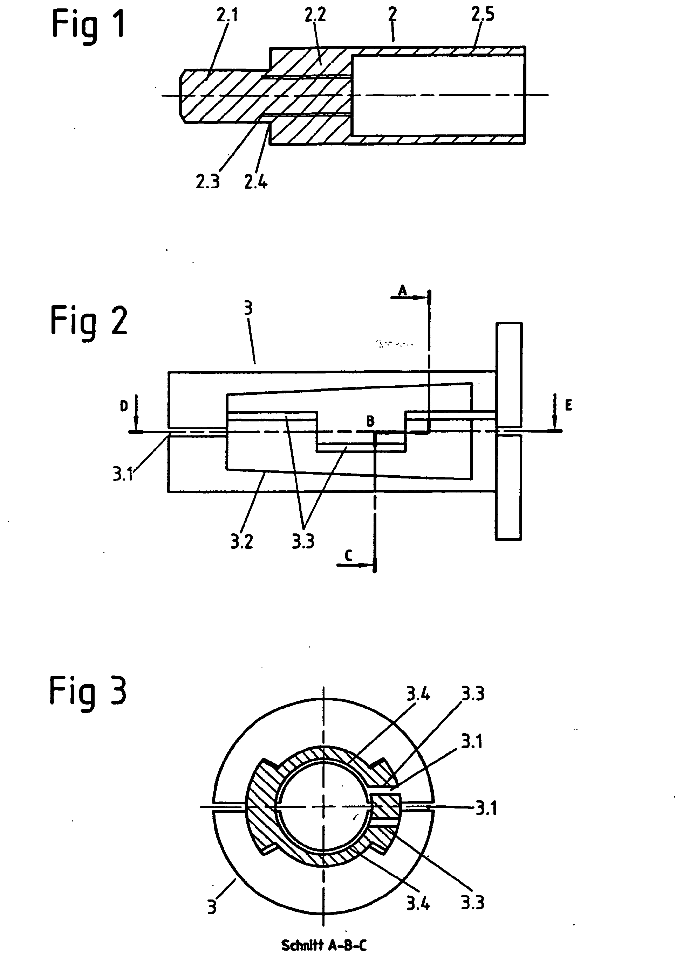

Die in Fig. 1 dargestellte einteilige zylindrische Dichthülse 2 mit dem angeformten zylindrischen Stopfen 2.1, dient einerseits zur Abdichtung des Kabelschutzrohres 5 gegenüber dem Kabel 6 und andererseits, bei Bedarf, nach Abtrennen des angeformten zylindrischen Stopfens 2.1 auch als Kabelendverschluss. Der zylindrische Stopfen 2.1 ragt in die in diesem Bereich eine zylindrische Verdickung aufweisende Dichthülse hinein und kann somit innerhalb derselben verpresst werden. Der Stopfen 2.1 überragt dabei die Dichthülse 2 nach außen in Richtung der Symmetrieachse und kann bei Bedarf ohne Werkzeug von der Dichthülse abgerissen werden. Die Anformung dieses Stopfens 2,1 erfolgt außerhalb der Dichthülse 2, beispielsweise stirnseitig an derselben., wodurch die nach innen ragende Verdickung 2.2 der Dichthülse 2 im Bereich des Innendurchmessers glatt und somit als Dichtfläche geeignet ist. Mit 2.3 ist ein Ring und mit 2.4 eine stirnseitige Verbindung bezeichnet, während der Außendurchmesser der Dichthülse mit 2.5 bezeichnet ist.

In den folgenden Figuren ist das zweiteilige Gehäuse 3, das die Dichthülse 2 umfasst näher beschrieben, wobei selbstverständlich der Innendurchmesser des Gehäuses 3 auf den Außendurchmesser der Dichthülse 2 abgestimmt und an den beiden Enden des Gehäuseinnem 3.6/3.7 eine Verengung 3.5 vorgesehen ist. Diese Verengung 3.5 des Innenraumes des Gehäuses 3 ist größer als das abzudichtende Kabel oder Rohr jedoch kleiner als der Außendurchmesser der Dichthülse 2 wodurch eine gute abdichtende Wirkung erzielt wird.

Auf der Außenseite des Gehäuses 3 sind in Richtung dessen Längsachse schwalbenschwanzförmige Keile 3.2 angeformt und somit Bestandteil des Gehäuses 3. Diese Keile 3.2 sind jeweils beidseitig der Trennungsebenen der beiden Gehäusehälften 3 vorgesehen und entlang der Längsachse der Trennungsebenen als gegenseitige Verzahnung 3.3 unterteilt. Die Krümmung des Innendurchmessers des Gehäuses 3 setzt sich auch in der gegenseitigen Verzahnung 3.3 der Gegenseite fort. Hierdurch entsteht eine Verengung 3.5 entlang der Trennungsebene 3.1 im Bereich der Verzahnung 3.3 gegenüber der Dichthülse 2. Auf diese Weise verklemmen sich die beiden Hälften des Gehäuses 3 gegenseitig bei dessen Montage über der Dichthülse 2, was eine erhebliche Montagerleichterung auf Baustellen bedeutet. Dabei wird auch der evtl. Verlust von Bauteilen auf der Baustelle vermieden.

Außerdem wird das zweiteilige Gehäuse 3 noch von einem Verschlusselement 4 umfasst, das aus zwei einseitig miteinander verbundenen und um 180° versetzten, sich gegenüberliegenden Verbindungsklammern 4.1 und 4.2 besteht.

Die Verbindungsklammern 4.1 und 4.2 sind derart ausgebildet, dass sie auf ihrer Innenseite die Gegenstücke der an den Gehäusehälften angeformten schwalbenschwanzförmigen Verschlusskeilen 3.2 aufweisen. Mittels eines oder mehrerer auf der Außenseite des Verschlusselements 4 vorgesehener Ringe 4.4 ist dieses zusätzlich verstärkt. Diese Ringe erstrecken sich sowohl über beide Verbindungsklammern 4.1/4.2 als auch über deren einseitige Verbindung 4.3. Mit 4.5 ist die verbleibende Öffnung des aus hinreichend elastischem Werkstoff hergestellten Verschlusselementes 4 bezeichnet.

Die zwischen den Verbindungsklammern 4.1/4.2 des Verschlusselements 4 verbleibende Öffnung 4.5 ist vorteilhafterweise keilförmig ausgebildet und entspricht dabei in ihrer Ausrichtung der schwalbenschwanzförmigen Keile 4.8/4.9 innerhalb der Verbindungsklammer 4.1 bzw. 4.2., was eine Montageerleichterung durch zweifelsfreies Ansetzen derselben bedeutet.

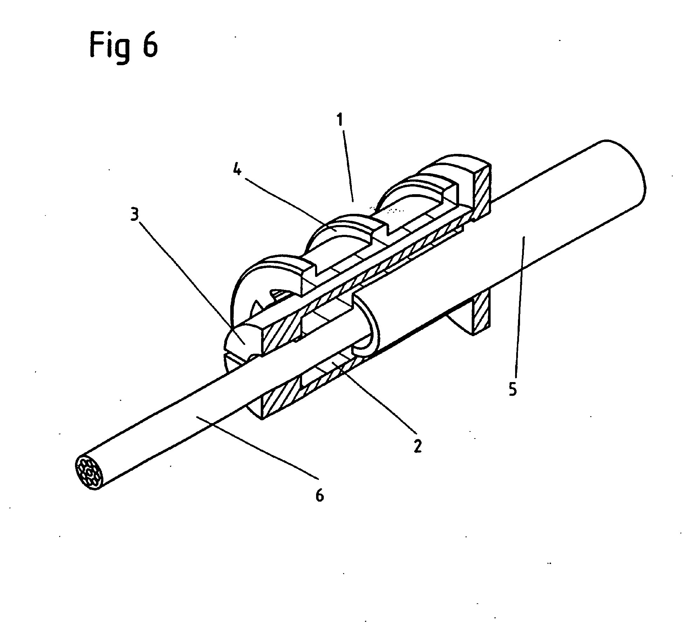

Die Figur 6 zeigt eine perspektivische Darstellung des Verschluss- und Abdichtelementes 1 gem. der Erfindung in einer perspektivischen Gesamtansicht. Daraus sind die Einzelteile, wie außen das Verschlusselement 4, weiter das zweiteilige Gehäuse 3 mit der sich darin befindlichen zylindrischen Dichthülse 2 und dem von rechts oben eingesteckten Rohr 5 (Schutzrohr) für das von links unten eingesteckte Kabel, beispielsweise Glasfaserkabel 6. Das Kabel 6 wird dabei nach Entfernen des Stopfens 2.2 in das Rohr 5 eingeführt und beide mittels der Dichthülse 2 abgedichtet.

### Bezugszeichenliste

- 1: Verschluss- und Abdichtelement
- 2: Zylindrische Dichthülse
- 3: Zweiteiliges Gehäuse
- 4: Verschlusselement
- 5: Rohr
- 6: Kabel

- 2.1: zylindrischer Stopfen
- 2.2: nach innen ragende Verdickung
- 2.3: Ring
- 2.4: Stirnseitige Verbindung
- 2.5: Außendurchmesser der Dichthülse

- 3.1: Trennungsebene
- 3.2: Schwalbenschwanzförmiger Verschlusskeil des Gehäuses
- 3.3: Gegenseitige Verzahnung
- 3.4: Fortgesetzte Krümmung im Innendurchmesser des Gehäuses
- 3.5: Verengung
- 3.6: Ende des Innendurchmessers
- 3.7: Gegenüberliegendes Ende des Innendurchmessers
- 3.8: Öffnung der Gehäusehälfte

- 4.1: Verbindungsklammer
- 4.2: Verbindungsklammer
- 4.3: Einseitige Verbindung
- 4.4: Umlaufender Ring
- 4.5: Verbleibende Öffnung
- 4.6: Längsseite der Verbindungsklammer
- 4.7: Zweite Längsseite der Verbindungsklammer
- 4.8: Schwalbenschwanzförmiger Keil in der Verbindungsklammer
- 4.9: Zweiter schwalbenschwanzförmiger Keil in der Verbindungsklammer

## Patentansprüche

1. Mehrteiliges Verschluss- und Abdichtelement **(1)** für mit Kabeln **(6)** belegbare Rohre **(5),** bestehend aus einem zweiteiligen Gehäuse (3), an dem entlang seiner Trennebene **(3.1)** schwalbenschwanzförmige Verschlusskeile (3.2) angeformt und zwei am Gehäuseumfang um 180° versetzte Verbindungsklammern **(4.1; 4.2)** vorgesehen sind, **dadurch gekennzeichnet, dass** um ein Kabel (6) eine zylindrische Dichthülse (2) gelegt ist, die von dem zweiteiligen Gehäuse (3) umfasst ist, entlang dessen Trennebenen **(3.1)** zwei um 180° versetzte schwalbenschwanzförmige Verschlusskeile (3.2) mit gegenseitiger Verzahnung (3.3) vorgesehen sind und die Krümmung (3.4) des Innendurchmessers des **zweiteiligen** Gehäuses (3) sich in der gegenseitigen Verzahnung (3.3) fortsetzt wobei die beiden Verbindungsklammern (4.1/4.2) einseitig miteinander zu einem Verschlusselement (4) verbunden sind.

2. Verschluss- und Abdichtelement (1) nach Anspruch 1, **dadurch gekennzeichnet, dass** in einem Ende der zylindrischen Dichthülse (2) ein ebenfalls zylindrischer in die Dichthülse (2) ragender Stopfen (2.1) aus gleichem Werkstoff angeformt ist, wobei die Dichthülse (2) in diesem Anformungsbereich eine nach innen ragende Verdickung (2.2) besitzt, der Stopfen (2.1) an der Dichthülse (2) über diese in Richtung der Symmetrieachse hinausragt und vom Innenraum der Dichthülse (2) bis zur stirnseitigen Verbindung (2.4) sich ein Ring (2.3) erstreckt.

3. Verschluss- und Abdichtelement (1) nach Anspruch 1 und 2, **dadurch gekennzeichnet, dass** der zylindrische Stopfen (2.1) derart mit der Dichthülse (2) verbunden ist, dass die Verbindung am Stopfen (2.1) und der Dichthülse (2) jeweils stirnseitig angeformt ist.

4. Verschluss- und Abdichtelement (1) nach Anspruch 1 und 2, **dadurch gekennzeichnet, dass** das zweiteilige Gehäuse (3) an den beiden Enden des Innendurchmessers eine Verengung (3.6/3.7) aufweist, welche größer ist als das abzudichtende Rohr (5) bzw. Kabel (6), aber einen geringeren Durchmesser besitzt als der Außendurchmesser der Dichthülse (2) beträgt.

5. Verschluss- und Abdichtelement (1) nach Anspruch 1 und einen der folgenden, **dadurch gekennzeichnet, dass** im Bereich der gegenseitigen Verzahnung (3.3) des Gehäuses (3) entlang der Trennungsebene (3.1) eine Durchmesserreduzierung gegenüber dem Außendurchmesser (2.5) der Dichthülse (2) vorgesehen ist.

6. Verschluss- und Abdichtelement (1) nach Anspruch 1 und einen der folgenden, **dadurch gekennzeichnet, dass** die Außenseite des Verschlusselementes (4) mit mindestens einem angeformten umlaufenden Ring (4.4) verstärkt ist, der sich über beide Verbindungsklammern (4.1/4.2) und deren einseitige Verbindung erstreckt.

7. Verschluss- und Abdichtelement (1), nach Anspruch 1 und einen der folgenden, **dadurch gekennzeichnet, dass** die verbleibende Öffnung (4,5) zwischen den Längsseiten der Verbindungsklammern (4.6/4.7) keilförmig ausgebildet ist und deren Ausrichtung der der Verbindungsklammern (4.1/4.2) innerhalb des Verschlusselementes (4) entspricht.

## Claims

1. Multiple-part closing and sealing element (1) for tubes (5) that can be fitted with cables (6), consisting of a two-part housing (3) in which dovetailed closing wedges (3.2) are moulded along its separating level (3.1) and two connecting clips (4.1;4.2) offset by 180° are provided on the circumference of the housing, **characterised in that** a cylindrical sealing sleeve (2) is positioned around a cable (6), said sleeve being surrounded by the two-part housing (3) along whose separating levels (3.1) two dovetailed closing wedges (3.2) offset by 180° with reciprocal tooth formation (3.3) are provided, and the curvature (3.4) of the internal diameter of the two-part housing (3) continuing in the reciprocal tooth formation (3.3), and with the two connecting clips (4.1/4.2) being connected to each other on one side to form a closing element (4).

2. Closing and sealing element (1) in accordance with Claim 1, **characterised in that** a plug (2.1), which is also cylindrical and which projects into the sealing sleeve (2) is moulded from the same material in one end of the cylindrical sealing sleeve (2), with the sealing sleeve (2) having an inwards-projecting thicker section (2.2) in this mould area, the plug (2.1) on the sealing sleeve (2) projecting beyond said section in the direction of the symmetrical axis, and with a ring (2.3) extending from the interior of the sealing sleeve (2) as far as the front connection (2.4).

3. Closing and sealing element (1) in accordance with Claims 1 and 2, **characterised in that** the cylindrical plug (2.1) is connected to the sealing sleeve (2) in such a way that the connections to the plug (2.1) and to the sealing sleeve (2) are each moulded on the front side.

4. Closing and sealing element (1) in accordance with Claims 1 and 2, **characterised in that** at both ends of the internal diameter the two-part housing (3) has a narrower section (3.6/3.7) which is larger than the tube (5) or cable (6) to be sealed, but which has a smaller diameter than that of the outer diameter of the sealing sleeve (2).

5. Closing and sealing element (1) in accordance with Claim 1 and one of the following, **characterised in that** in the area of the reciprocal tooth formation (3.3) of the housing (3) along its separating level (3.1) a reduction in diameter is provided for compared with the outer diameter (2.5) of the sealing sleeve (2).

6. Closing and sealing element (1) in accordance with Claim 1 and one of the following, **characterised in that** the outer side of the closing element (4) is reinforced with at least one moulded circular ring (4.4) which extends over the two connecting clips (4.1/4.2) and their one-sided connection.

7. Closing and sealing element (1) in accordance with Claim 1 and one of the following, **characterised in that** the remaining opening (4,5) between the longitudinal sides of the connecting clips (4.6/4.7) is wedge-shaped and that its alignment corresponds to that of the connecting clips (4.1/4.2) within the closing element (4).

## Revendications

1. Elément d'obturation et d'étanchéité **(1)** en plusieurs parties, destiné à des tubes **(5)** pouvant être équipés de câbles **(6),** comprenant un boîtier **(3)** en deux parties sur lequel, le long du plan de séparation **(3.1),** des clavettes d'obturation **(3.2)** en forme de queue d'aronde sont formées et sur le pourtour duquel deux collerettes de raccordement **(4.1 ; 4.2)** distantes de 180° sont prévues, **caractérisé en ce qu'**une douille d'étanchéité cylindrique **(2)** est montée autour d'un câble **(6),** laquelle douille est contenue dans le boîtier **(3)** en deux parties, **en ce que** deux clavettes d'obturation **(3.2)** en forme de queue d'aronde, à denture réciproque **(3.3)** et distantes de 180° sont prévues le long des plans de séparation **(3.1)** dudit boîtier et **en ce que** la courbure **(3.4)** du diamètre intérieur du boîtier **(3)** en deux parties se prolonge dans la denture réciproque **(3.3),** les deux collerettes de raccordement **(4.1/4.2)** étant reliées d'un côté à un élément d'obturation **(4).**

2. Elément d'obturation et d'étanchéité **(1)** conformément à la revendication 1, **caractérisé en ce que** dans l'une des extrémités de la douille d'étanchéité cylindrique **(2)** un embout mâle **(2.1)** également cylindrique, réalisé dans le même matériau et en saillie dans la douille d'étanchéité **(2),** est obtenu par formage, la douille d'étanchéité **(2)** présentant dans la zone dudit formage une surépaisseur **(2.2)** dépassant à l'intérieur, l'embout mâle **(2.1)** au niveau de la douille d'étanchéité **(2)** dépassant de celle-ci suivant l'axe de symétrie et une bague **(2.3)** étant prévue entre la cavité intérieure de la douille d'étanchéité **(2)** et le raccordement **(2.4)** côté avant.

3. Elément d'obturation et d'étanchéité **(1)** conformément à la revendication 1 et 2, **caractérisé en ce que** l'embout mâle cylindrique **(2.1)** est relié à la douille d'étanchéité **(2)** de sorte que dans les deux cas le raccordement au niveau de l'embout mâle **(2.1)** et de la douille d'étanchéité **(2)** est formé côté avant.

4. Elément d'obturation et d'étanchéité **(1)** conformément à la revendication 1 et 2, **caractérisé en ce que** le boîtier **(3)** en deux parties présente aux deux extrémités du diamètre intérieur un rétrécissement **(3.6/3.7)** dont la dimension est supérieure à celle du tube à étanchéifier **(5)** et/ou du câble **(6),** mais dont le diamètre est inférieur au diamètre extérieur de la douille d'étanchéité **(2).**

5. Elément d'obturation et d'étanchéité **(1)** conformément à la revendication 1 et l'une des autres revendications, **caractérisé en ce que** dans la zone de la denture réciproque **(3.3)** du boîtier **(3)** une réduction de diamètre par rapport au diamètre extérieur **(2.5)** de la douille d'étanchéité **(2)** est prévue le long du plan de séparation **(3.1).**

6. Elément d'obturation et d'étanchéité **(1)** conformément à la revendication 1 et l'une des autres revendications, **caractérisé en ce que** le côté extérieur de l'élément d'obturation **(4)** est renforcé par au moins une bague **(4.4)** complète obtenue par formage, laquelle englobe les deux collerettes de raccordement **(4.1/4.2)** et leur raccordement sur un côté.

7. Elément d'obturation et d'étanchéité **(1)** conformément à la revendication 1 et l'une des autres revendications, **caractérisé en ce que** l'orifice résiduel **(4.5)** entre les grands côtés des collerettes de raccordement **(4.6/4.7)** est configuré en forme de clavette, son orientation correspondant à celle des collerettes de raccordement **(4.1/4.2)** à l'intérieur de l'élément d'obturation **(4).**
